# EUROPEAN PATENT SPECIFICATION

(11) **EP 4 114 143 B1**
(45) Date of publication and mention of the grant of the patent: **03.07.2024**
(21) Application number: 21792233.5
(22) Date of filing: 21.04.2021
(51) Int. Cl.: H05B 6/50, H05B 6/62, A23L 3/365

(54) **DEFROSTING METHOD FOR HEATING APPARATUS, AND HEATING APPARATUS**
ABTAUVERFAHREN FÜR HEIZVORRICHTUNG UND HEIZVORRICHTUNG
PROCÉDÉ DE DÉGIVRAGE POUR APPAREIL DE CHAUFFAGE, ET APPAREIL DE CHAUFFAGE

(30) Priority: 22.04.2020 CN 202010324163
(43) Date of publication of application: 04.01.2023
(73) Proprietor: Qingdao Haier Refrigerator Co., Ltd., Laoshan District Qingdao Shandong 266101 (CN); Haier Smart Home Co., Ltd., Qingdao, Shandong 266101 (CN)
(72) Inventor: HAN, Zhiqiang, Qingdao, Shandong 266101 (CN); WANG, Ming, Qingdao, Shandong 266101 (CN); LI, Peng, Qingdao, Shandong 266101 (CN); WANG, Haijuan, Qingdao, Shandong 266101 (CN); LI, Chunyang, Qingdao, Shandong 266101 (CN); JI, Lisheng, Qingdao, Shandong 266101 (CN)
(74) Representative: Ziebig Hengelhaupt Intellectual Property Attorneys Patentanwaltskanzlei PartGmbB
(86) International application number: PCT/CN2021/088715
(87) International publication number: WO 2021/213441

(56) References cited:
- WO-A1-2018/223947
- WO-A1-2019/239995
- WO-A1-2022/105501
- CN-A- 106 288 626
- CN-A- 109 990 535
- CN-U- 209 897 300
- CN-U- 209 897 300
- JP-A- 2013 072 618
- US-A1- 2009 236 335

## Description

### FIELD OF THE INVENTION

The present invention relates to the field of food treatment, and in particular to a thawing method for a heating apparatus, and the heating apparatus.

### BACKGROUND OF THE INVENTION

In the freezing process of food, the quality of the food is maintained, but the frozen food needs to be thawed before processing or eating. In order to facilitate food thawing, electromagnetic wave heating devices are usually used to thaw food.

Using the electromagnetic wave heating devices to thaw food is not only fast and efficient, but also realizes low loss of nutrients. However, in the prior art, the end of thawing is generally determined by the time or temperature set by a user, which puts forward too high requirements for the user, and easily causes the thawed food to be overcooled or overheated. Moreover, due to the different penetration and absorption of water and ice by microwave and the uneven distribution of substances in the food, the melted areas absorb more energy, which easily leads to the problems of uneven thawing and local overheating.

WO 2018/223947 A1 discloses a thawing method using a thawing device integrated in a refrigerator, the thawing device comprising a cavity capacitor and an electromagnetic wave generation module. The disclosed method operates according to the steps defined by the preamble of claim 1.

### BRIEF DESCRIPTION OF THE INVENTION

An object of a first aspect of the present invention is to overcome at least one technical defect in the prior art, and to provide a thawing method for a heating apparatus according to claim 1.

An object of a second aspect of the present invention is to provide a heating apparatus according to claim 4.

According to the first aspect of the present invention, provided is a thawing method for a heating apparatus, the heating apparatus including a cavity capacitor for placement of an object to be treated, and an electromagnetic wave generation module that generates an electromagnetic wave signal for heating the object to be treated. The thawing method includes:
receiving a thawing instruction input by a user;
acquiring a feature parameter that reflects the weight of the object to be treated, a power value of the electromagnetic wave signal, and a rate of change in a dielectric coefficient of the object to be treated; and
determining the thawing progress of the object to be treated according to the feature parameter, the power value and the rate of change.

Optionally, the step of determining the thawing progress of the object to be treated according to the feature parameter, the power value and the rate of change includes:
determining a threshold value of change in the dielectric coefficient of the object to be treated according to the feature parameter and the power value; and
when the rate of change is less than the threshold value of change, controlling the electromagnetic wave generation module to stop working.

Optionally, the step of determining a threshold value of change in the dielectric coefficient of the object to be treated according to the feature parameter and the power value includes:
according to the feature parameter and the power value, matching a corresponding threshold value of change based on a preset comparison relationship, where
in the case of the same power value, the threshold value of change is inversely proportional to the weight reflected by the feature parameter; and/or
in the case of the same weight reflected by the feature parameter, the threshold value of change is proportional to the power value.

According to the second aspect of the present invention, provided is a heating apparatus, including:
a cavity capacitor, used for placement of an object to be treated;
an electromagnetic wave generation module, configured to generate an electromagnetic wave signal for heating the object to be treated in the cavity capacitor; and
a controller, configured to perform any one of the above-mentioned thawing methods.

Compared with determining, according to a sensed temperature of the object to be treated, the thawing progress of the object to be treated, the present invention that determines the thawing progress according to the power of the electromagnetic wave signal, the weight of the object to be treated and the rate of change in the dielectric coefficient of the object to be treated is less influenced by the precision of a sensing device itself, and achieves relatively accurate determination, thereby facilitating further treatment by the user on the thawed object to be treated.

Further, the present invention determines whether the thawing is completed by comparing the rate of change in the dielectric coefficient of the object to be treated with a threshold value of change determined by the power of the electromagnetic wave signal and the weight of the object to be treated, which can effectively prevent the object to be treated from being excessively thawed, is especially suitable for objects to be treated whose thawing temperature is expected to be -4 to -1°C. The thawed meat foods produce no blood and water and are easy to cut, and thawed vegetable foods have no moisture outflow and are less in nutrient loss.

Further, the present invention reflects the weight of the object to be treated through the parameters related to the capacitance of the cavity capacitor (the capacitance itself, the impedance value of the matching module that realizes optimal load matching, the frequency value of the electromagnetic wave signal that realizes optimal frequency matching, etc.). There is no need for the user to manually input the weight of the object to be treated based on experience or measurement, or to add a load cell in the cavity capacitor, which not only saves costs, but also improves the fault tolerant rate.

Further, the present invention, by numbering all the on-off combinations of the matching module and all the matching branches respectively, can quickly match matching branches corresponding to each of the on-off combinations for on and off in the process of determining the impedance value of the matching module that realizes the optimal load matching of the electromagnetic wave generation module, thereby shortening the time required for determining the feature parameter of the object to be treated, and greatly improving the user experience. In particular, according to the numbering method of the present invention, the corresponding threshold value of change can be matched directly by using the combination number, which simplifies the control process and further shortens the time required for determining the feature parameter of the object to be treated.

The above and other objectives, advantages, and characteristics of the present invention will be better understood by those skilled in the art according to the following detailed description of specific embodiments of the present invention in conjunction with the accompanying drawings.

### BRIEF DESCRIPTION OF THE DRAWINGS

Some specific embodiments of the present invention will be described in detail below in an exemplary rather than limited manner with reference to the accompanying drawings. The same reference numerals in the accompanying drawings indicate the same or similar components or parts. Those skilled in the art should understand that these accompanying drawings are not necessarily drawn to scale. In figures:
FIG. 1 is a schematic structural diagram of a heating apparatus according to an embodiment of the present invention;
FIG. 2 is a schematic structural diagram of a controller in FIG. 1;
FIG. 3 is a schematic circuit diagram of a matching module according to an embodiment of the present invention;
FIG. 4 is a schematic flowchart of a thawing method for a heating apparatus according to an embodiment of the present invention;
FIG. 5 is a detailed flowchart of a thawing method for a heating apparatus according to an embodiment which is not part of the present invention; and
FIG. 6 is a schematic flowchart of determining a threshold value of change in a dielectric coefficient of an object to be treated according to another embodiment which is not part of the present invention.

### DETAILED DESCRIPTION

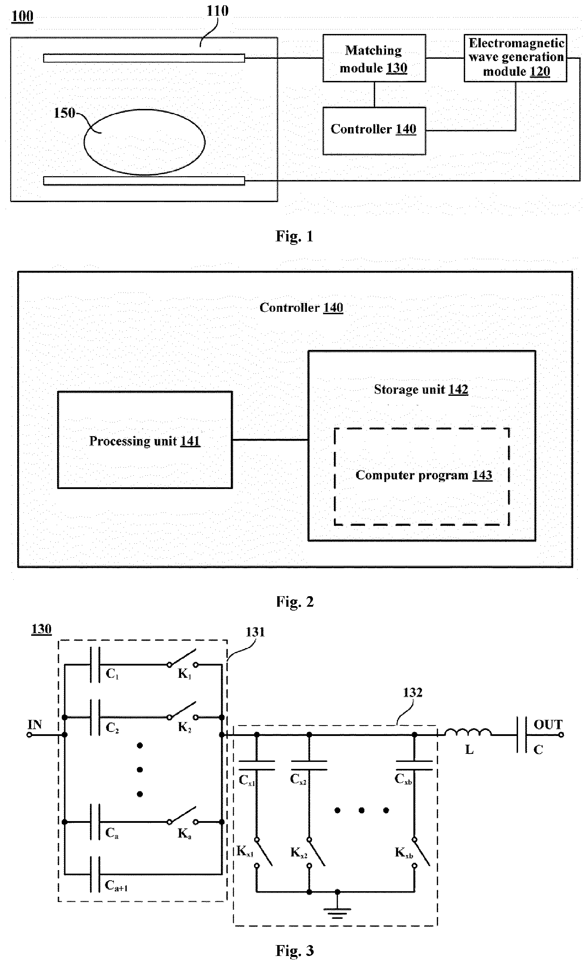

FIG. 1 is a schematic structural diagram of a heating apparatus 100 according to an embodiment of the present invention. Referring to FIG. 1, the heating apparatus 100 may include a cavity capacitor 110, an electromagnetic wave generation module 120 and a controller 140.

Specifically, the cavity capacitor 110 may include a cavity for placement of an object to be treated 150, and a radiation pole plate disposed in the cavity. In some embodiments, a receiving pole plate may further be provided in the cavity to form a capacitor with the radiation pole plate. In some other embodiments, the cavity may be made of metal, which serves as the receiving pole plate to form the capacitor together with the radiation pole plate.

The electromagnetic wave generation module 120 may be configured to generate an electromagnetic wave signal and be electrically connected to the radiation pole plate of the cavity capacitor 110 to generate electromagnetic waves in the cavity capacitor 110, thereby heating the object to be treated 150 in the cavity capacitor 110.

FIG. 2 is a schematic structural diagram of the controller 140 in FIG. 1. Referring to FIG. 2, the controller 140 may include a processing unit 141 and a storage unit 142. The storage unit 142 stores a computer program 143, and the computer program 143 is used to implement the control method of the embodiment of the present invention when executed by the processing unit 141.

In particular, the processing unit 141 may be configured to, after receiving a thawing instruction input by a user, acquire a feature parameter that reflects the weight of the object to be treated 150, a power value (i.e., heating power) of the electromagnetic wave signal used to heat the object to be treated 150, and a rate of change in a dielectric coefficient of the object to be treated 150, and further determine the thawing progress of the object to be treated 150 according to the feature parameter, the heating power and the rate of change in the dielectric coefficient of the object to be treated 150.

Compared with determining, according to a sensed temperature of the object to be treated 150, the thawing progress of the object to be treated 150, the heating apparatus 100 of the present invention that determines the thawing progress according to the power of the electromagnetic wave signal for heating the object to be treated 150, the weight of the object to be treated 150 and the rate of change in the dielectric coefficient of the object to be treated 150 is less influenced by the precision of a sensing device itself, and achieves relatively accurate determination, thereby facilitating further treatment by the user on the thawed object to be treated 150.

In some embodiments, the processing unit 141 may be further configured to determine a threshold value of change in the dielectric coefficient of the object to be treated 150 according to the feature parameter and the heating power for determining whether the thawing is complete.

When the rate of change in the dielectric coefficient of the object to be treated 150 is less than the threshold value of change, the processing unit 141 can control the electromagnetic wave generation module 120 to stop working, that is, to stop heating the object to be treated 150 to prevent the object to be treated 150 from being overly thawed.

The processing unit 141 may be configured to match, according to the feature parameter and the power value, the corresponding threshold value of change based on a preset comparison relationship. In the case of the same power value, the threshold value of change is substantially inversely proportional to the weight reflected by the feature parameter. In the case of the same weight reflected by the feature parameter, the threshold value of change is substantially proportional to the power value, so as to be suitable for different kinds and weights of foods, and avoid excessive or incomplete thawing. The comparison relationship may be a formula, a comparison table, etc.

In some further embodiments, the processing unit 141 may be configured to determine, according to a food group of the object to be treated 150, the power value of the electromagnetic wave signal used for heating of the object to be treated 150, so as to alleviate the phenomena of uneven heating and local overheating caused by different contents of substances in different foods.

The food group may be input by the user, or judged by means of image recognition or spectrum recognition. Each food group may include at least one food variety, so that the fault tolerant rate is increased, and the requirements for users are lowered.

The threshold value of change can be determined specifically by performing heating experiments with different heating powers on different kinds and weights of objects to be treated 150, and detecting the rate of change in the dielectric coefficient of the object to be treated 150 at -4 to -1°C, so as to further improve the accuracy of judging whether the thawing is completed, make thawed meat foods produce no blood and water and easy to cut, and ensure thawed vegetable foods to have no moisture outflow and be less in nutrient loss.

According to the invention, the feature parameter reflecting the weight of the object to be treated 150 may be a capacitance value of the cavity capacitor 110, and there is no need for the user to manually input the weight of the object to be treated 150 based on experience or measurement, or to add a load cell in the cavity capacitor 110, which not only saves costs, but also improves the fault tolerant rate.

In some further embodiments, the heating apparatus 100 further includes a matching module 130. The matching module 130 may be connected in series between the electromagnetic wave generation module 120 and the cavity capacitor 110 or in parallel at both ends of the cavity capacitor 110, and is configured to adjust the load impedance of the electromagnetic wave generation module 120 by adjusting its own impedance, so as to achieve load matching and improve heating efficiency.

The processing unit 141 may be configured to control the electromagnetic wave generation module 120 to generate an electromagnetic wave signal with a preset initial power, adjust the impedance of the matching module 130 to perform load matching, determine an impedance value of the matching module 130 that realizes the optimal load matching of the electromagnetic wave generation module 120, and further determine, according to the impedance value of the matching module 130 that realizes the optimal load matching, the capacitance of the cavity capacitor 110 or directly take the impedance value of the matching module 130 that realizes the optimal load matching as the feature parameter.

The matching module 130 may include a plurality of matching branches that can be switched on and off independently. The processing unit 141 may be further configured to traverse the on-off combinations of the plurality of matching branches and obtain a matching degree parameter that corresponds to each on-off combination and reflects the load matching degree of the electromagnetic wave generation module 120, compare the matching degree parameters of the on-off combinations of the plurality of matching branches, and determine, according to a comparison result, the on-off combination that realizes the optimal load matching as well as the impedance value corresponding to the on-off combination.

Specifically, the storage unit 142 may store a pre-configured number set, the number set may include combination numbers of the on-off combinations of the plurality of matching branches, and the combination numbers correspond to the impedance values of the matching module 130. The processing unit 141 may be further configured to obtain the pre-configured number set after obtaining a heating instruction, and then determine the branch number of the matching branch corresponding to each combination number one by one based on the number set, and control the on and off of the corresponding matching branches according to the branch numbers, so as to realize traversing of the on-off combinations of the plurality of matching branches.

The heating apparatus 100 of the present invention, by numbering all the on-off combinations of the matching module 130 and all the matching branches respectively, can quickly match the matching branches corresponding to each of the on-off combinations for on and off in the process of determining the impedance value of the matching module130 that realizes the optimal load matching of the electromagnetic wave generation module 120, thereby shortening the time required for determining the capacitance of the cavity capacitor 110, and greatly improving the user experience.

In this embodiment, the feature parameter may be the impedance value of the matching module 130 for the optimal load matching, or the combination number, so as to simplify the control process and further shorten the time required for determining the feature parameter of the object to be treated 150.

The branch numbers of the plurality of matching branches may be 0 to n-1 power of a constant A in turn, and the combination number may be the sum of the branch numbers of conducting matching branches in the on-off combination, so that the only group of conducting matching branches can be accurately determined by only the branch numbers. The constant A may be 2, 3, 4, or the like, and n is the number of the matching branches. In the present invention, the constant A may be 2, so as to reduce the storage space occupied by the numbers and improve the matching efficiency.

FIG. 3 is a schematic circuit diagram of the matching module 130 according to an embodiment of the present invention. Referring to FIG. 3, in some further embodiments, the matching module 130 may include a first matching unit 131 connected in series between the electromagnetic wave generation module 120 and the cavity capacitor 110, and a second matching unit 132 with one end electrically connected between the first matching unit 131 and the cavity capacitor 110 and the other end grounded. The first matching unit 131 and the second matching unit 132 may respectively include a plurality of matching branches connected in parallel, and each matching branch includes a fixed-value capacitor and a switch, so as to improve the reliability and adjustment range of the matching module 130 while making a circuit simple, and thus increase the acquired impedance value of the matching module 130 that realizes the optimal load matching.

The capacitance values of a plurality of fixed-value capacitors of the first matching unit 131 and the second matching unit 132 may all be unequal , and the capacitance value of the minimum fixed-value capacitor of the second matching unit 132 may be greater than that of the maximum fixed-value capacitor of the first matching unit 131. The numbers of the plurality of branches may be sequentially increased from small to large according to the capacitance values of the corresponding matching branches.

Referring to FIG. 3, the capacitance values of the capacitors C₁, C₂, ..., Cₐ of the first matching unit 131 increase in turn, and the capacitance values of the capacitors Cₓ₁, Cₓ₂, ..., C_{xb} (where a+b=n) of the second matching unit 132 increase in turn, and the capacitance value of the capacitor Cₓ₁ is greater than that of the capacitor Cₐ. In an embodiment where the constant A is 2, the matching branches corresponding to C₁, C₂, ..., Cₐ, Cₓ₁, Cₓ₂, ..., C_{xb} can be numbered as 2⁰, 2¹, ..., 2^{a-1}, 2^{a}, 2^{a+1}, ..., 2ⁿ⁻¹ in turn.

According to a resonant frequency calculation formula f=1/(2*π*·sqrt(L·C), for the same heating apparatus 100 (inductance L remains unchanged), when the capacitance value C of the cavity capacitor 110 changes due to the placement of different objects to be treated 150, the resonant frequency f applicable to the cavity capacitor 110 also changes. In some other embodiments, the electromagnetic wave generation module 120 may include a variable frequency source and a power amplifier.

The processing unit 141 may be configured to control the electromagnetic wave generation module 120 to generate an electromagnetic wave signal with a preset initial power after obtaining a heating instruction, adjust the frequency of the electromagnetic wave signal generated by the electromagnetic wave generation module 120 within a candidate frequency range, determine a frequency value of the electromagnetic wave signal that realizes the optimal frequency matching of the cavity capacitor 110, and further determine a capacitance of the cavity capacitor 110 according to the frequency value that realizes the optimal frequency matching, or directly use the frequency value that realizes the optimal frequency matching as the feature parameter.

The minimum value and the maximum value of the candidate frequency range may be 32-38MHz and 42-48MHz respectively, so that the penetration of electromagnetic waves is improved, and uniform heating is achieved. For example, the candidate frequency range is 32-48MHz, 35-48MHz, 35-45MHz, 38-45MHz, 38-42MHz, etc.

The processing unit 141 may be configured to adjust the frequency of the electromagnetic wave signal within the candidate frequency range in a dichotomy manner, gradually narrow the frequency approximation range for realizing the optimal frequency matching to a minimum approximation range, and further determine the frequency value of the electromagnetic wave signal that realizes the optimal frequency matching.

Specifically, the processing unit 141 may be configured to adjust the frequency of the electromagnetic wave signal to be the minimum, intermediate and maximum values of the frequency approximation range, obtain the matching degree parameter that corresponds to each frequency and reflects a frequency matching degree of the cavity capacitor 110 for comparison, and re-determine, according to the comparison result, the frequency approximation range, which are repeated until the frequency approximation range is the minimum approximation range; and the frequency of the electromagnetic wave signal is adjusted to the minimum, intermediate and maximum values of the minimum approximation range, the matching degree parameter that corresponds to each frequency and reflects the frequency matching degree of the of the cavity capacitor 110 is obtained for comparison, and an optimal frequency value is determined according to the comparison result, where an initial frequency approximation range may be the aforementioned candidate frequency range.

The heating apparatus 100 of the present invention determines the frequency value for realizing the optimal frequency matching in the candidate frequency range by using a dichotomy method, which can quickly narrow the range where the optimal frequency value is located, and then quickly determine the optimal frequency value, thus shortening the time required for determining the capacitance of the cavity capacitor 110 and greatly improving the user experience.

It should be noted that the minimum approximation range in the present invention is not a specific frequency range, but a minimum range of the frequency approximation range, that is, the accuracy of the optimal frequency value. In some embodiments, the minimum approximation range may be any value in a range of 0.2 to 20KHz, such as 0.2KHz, 1KHz, 5KHz, 10KHz, or 20KHz. The time interval between every two adjacent times of adjusting the frequency of the electromagnetic wave signal may be 10-20ms, such as 10ms, 15ms, or 20ms.

In some embodiments, the variable frequency source may be a voltage-controlled oscillator whose input voltage corresponds to the output frequency. The processing unit 141 may be configured to determine the capacitance of the cavity capacitor 110 according to the input voltage of the voltage-controlled oscillator or directly use the input voltage as the feature parameter.

In the present invention, the optimal load matching of the electromagnetic wave generation module 120 and the optimal frequency matching of the cavity capacitor 110 mean that with the same heating apparatus 100, the output power allocated by the electromagnetic wave generation module 120 to the cavity capacitor 110 accounts for the largest proportion.

In the present invention, the preset initial power may be 10-20W, such as 10W, 15W or 20W, so as to obtain an impedance value that realizes the optimal load matching or a frequency value that achieves the optimal frequency matching with high accuracy while saving energy.

In some embodiments, the heating apparatus 100 may further include a bidirectional coupler, which is connected in series between the cavity capacitor 110 and the electromagnetic wave generation module 120, and is used for real-time monitoring a forward power signal output by the electromagnetic wave generation module 120 and a reverse power signal returned to the electromagnetic wave generation module 120.

The processing unit 141 may also be configured to acquire the forward power signal output by the electromagnetic wave generation module 120 and the reverse power signal returned to the electromagnetic wave generation module 120 after each time the impedance values of the matching module 130 are adjusted or the frequency of the electromagnetic wave signal is adjusted, and calculate the matching degree parameter according to the forward power signal and the reverse power signal.

The matching degree parameter may be a return loss S11, which can be calculated according to a formula S11=-20log (reverse power / forward power). In this embodiment, the smaller the value of return loss S11, the higher the load matching degree of the electromagnetic wave generation module 120 or the frequency matching degree of the cavity capacitor 110, and the impedance value or frequency value corresponding to the minimum return loss S11 is the impedance value that realizes the optimal load matching or the frequency value that realizes the optimal frequency matching.

The matching degree parameter may alternatively be an electromagnetic wave absorption rate, which can be calculated according to a formula of the electromagnetic wave absorption rate = (1-reverse power / forward power). In this embodiment, the greater the value of the electromagnetic wave absorption rate, the higher the load matching degree of the electromagnetic wave generation module 120 or the frequency matching degree of the cavity capacitor 110, and the impedance value or frequency value corresponding to the maximum electromagnetic wave absorption rate is the impedance value that realizes the optimal load matching or the frequency value that realizes the optimal frequency matching.

The matching degree parameter may alternatively be other parameters that can reflect a proportion of the output power allocated by the electromagnetic wave generation module 120 to the cavity capacitor 110.

In some further embodiments, the capacitance of the cavity capacitor 110 can be directly measured by means of a capacitance measuring instrument.

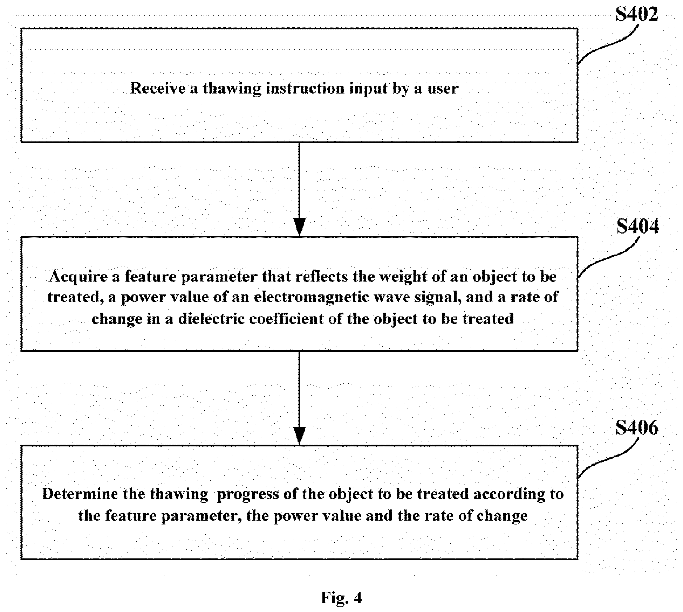

FIG. 4 is a schematic flowchart of a thawing method for a heating apparatus 100 according to an embodiment of the present invention. Referring to FIG. 4, the thawing method for the heating apparatus 100 executed by the controller 140 of any of the above embodiments of the present invention may include the following steps:
Step S402: a thawing instruction input by a user is received.
Step S404: a feature parameter that reflects the weight of an object to be treated 150, a power value of an electromagnetic wave signal used to heat the object to be treated 150, and a rate of change in a dielectric coefficient of the object to be treated 150 are acquired.
Step S406: the thawing progress of the object to be treated 150 is determined according to the feature parameter, the power value and the rate of change.

Compared with determining, according to the sensed temperature of the object to be treated 150, the thawing progress of the object to be treated 150, the thawing method of the present invention that determines the thawing progress according to the power of the electromagnetic wave signal, the weight of the object to be treated 150 and the rate of change in the dielectric coefficient of the object to be treated 150 is less influenced by the precision of the sensing device itself, and achieves relatively accurate determination, thereby facilitating further treatment by the user on the thawed object to be treated 150.

In some embodiments, the step S406 may include the following steps:
determining a threshold value of change in the dielectric coefficient of the object to be treated 150 according to the feature parameter and the power value of the electromagnetic wave signal used to heat the object to be treated 150; and
detecting in real time the rate of change in the dielectric coefficient of the object to be treated 150, and when the rate of change is less than the threshold value of change, controlling the electromagnetic wave generation module 120 to stop working.

The threshold value of change may be determined from the feature parameter and the power value by matching based on a preset comparison relationship; in the case of the same power value, the threshold value of change is inversely proportional to the weight reflected by the feature parameter. In the case of the same weight reflected by the feature parameter, the threshold value of change is proportional to the power value.

The feature parameter reflecting the weight of the object to be treated 150 is the capacitance itself of the cavity capacitor 110 after the object to be treated 150 is put into the cavity, the impedance value of the matching module 130 that realizes the optimal load matching, the frequency value of the electromagnetic wave signal that realizes the optimal frequency matching, or the like, and there is no need for the user to manually input the weight of the object to be treated 150 based on experience or measurement, or to add a load cell in the cavity capacitor 110, which not only saves the costs, but also improves the fault tolerant rate.

In some embodiments, the step of acquiring a feature parameter that reflects the weight of the object to be treated 150 includes:
controlling the electromagnetic wave generation module 120 to generate an electromagnetic wave signal with a preset initial power; and
adjusting the impedance of the matching module 130, determining an impedance value of the matching module 130 that realizes the optimal load matching of the electromagnetic wave generation module 120, and further determining, according to the impedance value of the matching module 130 that realizes the optimal load matching, the capacitance of the cavity capacitor 110 or directly taking the impedance value of the matching module 130 that realizes the optimal load matching as the feature parameter.

Specifically, adjusting the impedance of the matching module 130, and determining an impedance value of the matching module 130 that realizes the optimal load matching of the electromagnetic wave generation module 120 include: traversing on-off combinations of the plurality of matching branches, and obtaining the matching degree parameter that corresponds to each on-off combination and reflects the load matching degree of the electromagnetic wave generation module 120; comparing the matching degree parameters of the on-off combinations of the plurality of matching branches; and determining, according to a comparison result, the on-off combination that realizes the optimal load matching.

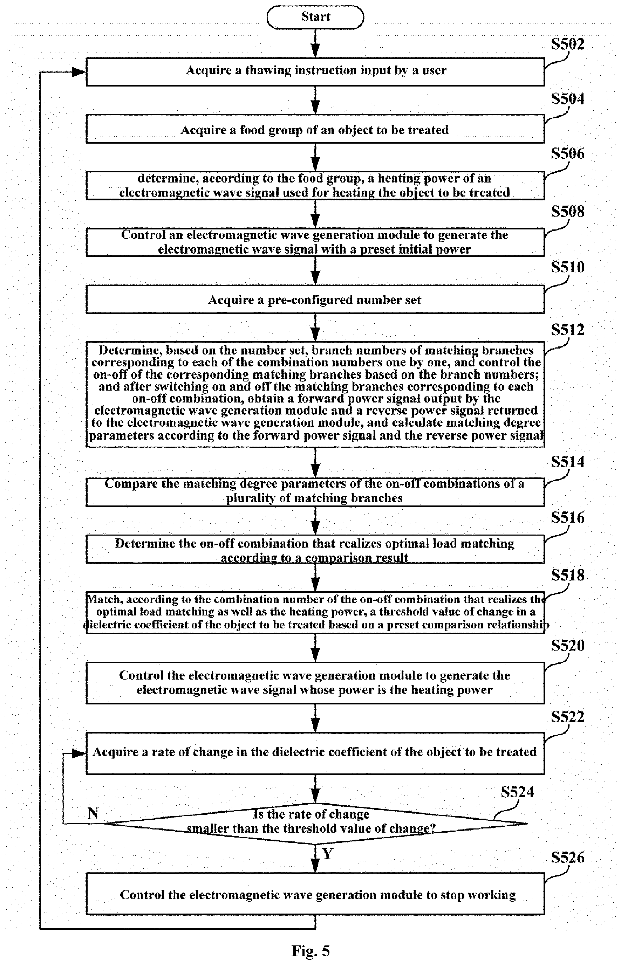

FIG. 5 is a detailed flowchart of a thawing method for a heating apparatus 100 according to an embodiment which is not part of the present invention (in the accompanying drawings of the present invention, 'Y' means 'Yes'; 'N' means 'No'). Referring to FIG. 5, the thawing method for the heating apparatus 100 according to an embodiment of the present invention may include the following detailed steps:
Step S502: a thawing instruction input by a user is acquired.
Step S504: a food group of an object to be treated 150 is acquired. In this step, the food group may be input by the user or judged by means of image recognition or spectrum recognition. Each food group may include at least one food variety, so that the fault tolerant rate is increased, and the requirements for users are lowered.
Step S506: the heating power of an electromagnetic wave signal used for heating the object to be treated 150 is determined according to the food group, so as to alleviate the phenomena of uneven heating and local overheating caused by different contents of substances in different foods.
Step S508: the electromagnetic wave generation module 120 is controlled to generate the electromagnetic wave signal with a preset initial power.
Step S510: a pre-configured number set is acquired.
Step S512: branch numbers of matching branches corresponding to each of the combination numbers are determined one by one based on the number set,, and the on-off of the corresponding matching branches is controlled based on the branch numbers; and after switching on and off the matching branches corresponding to each on-off combination, a forward power signal output by the electromagnetic wave generation module and a reverse power signal returned to the electromagnetic wave generation module 120 are obtained, and matching degree parameters are calculated according to the forward power signal and the reverse power signal, so as to quickly match the matching branches corresponding to each on-off combination for on and off, thereby shortening the time required for determining the capacitance of a cavity capacitor 110.
Step S514: the matching degree parameters of the on-off combinations of a plurality of matching branches are compared.
Step S516: the on-off combination that realizes optimal load matching is determined according to a comparison result.
Step S518: according to the combination number of the on-off combination that realizes the optimal load matching as well as the heating power, a threshold value of change in a dielectric coefficient of the object to be treated 150 is matched based on a preset comparison relationship, so as to simplify a control process and further shorten the time required for determining the feature parameter of the object to be treated 150.
Step S520: the electromagnetic wave generation module 120 is controlled to generate the electromagnetic wave signal whose power is the heating power.
Step S522: a rate of change in the dielectric coefficient of the object to be treated 150 is acquired.
Step S524: whether the rate of change in the dielectric coefficient of the object to be treated 150 is smaller than the threshold value of change is judged. If yes, step S526 is performed; and if not, it returns to step S522.
Step S526: the electromagnetic wave generation module 120 is controlled to stop working. It returns to step S502 to start a next thawing cycle.

In some other embodiments not being part of present invention, the difference from the previous embodiment is that acquiring a feature parameter that reflects the weight of the object to be treated 150 may include the following steps:
controlling the electromagnetic wave generation module 120 to generate the electromagnetic wave signal with the preset initial power; and
adjusting the frequency of the electromagnetic wave signal within a candidate frequency range, determining a frequency value of the electromagnetic wave signal that realizes optimal frequency matching of the cavity capacitor 110, and further determining the capacitance of the cavity capacitor 110 according to the frequency value that realizes the optimal frequency matching, or directly using the frequency value that realizes the optimal frequency matching as the feature parameter.

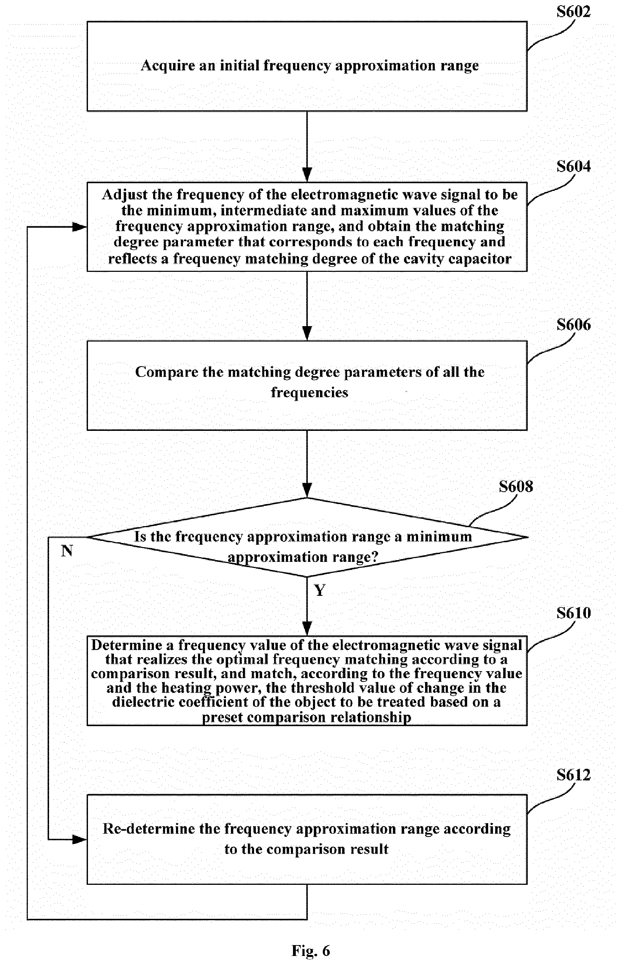

FIG. 6 is a schematic flowchart of determining the threshold value of change in the dielectric coefficient of the object to be treated 150 according to another embodiment which is not part of the present invention. Referring to FIG. 6, in another embodiment of the present invention, determining the threshold value of change in the dielectric coefficient of the object to be treated 150 may include the following steps:
Step S602: an initial frequency approximation range is acquired. The initial frequency approximation range may be the aforementioned candidate frequency range.
Step S604: the frequency of the electromagnetic wave signal is adjusted to be minimum, intermediate and maximum values of the frequency approximation range, and the matching degree parameter that corresponds to each frequency and reflects a frequency matching degree of the cavity capacitor 110 is obtained.
Step S606: the matching degree parameters of all the frequencies are compared.
Step S608: whether the frequency approximation range is a minimum approximation range is judged. If yes, step S610 is performed; and if not, step S612 is performed.
Step S610: a frequency value of the electromagnetic wave signal that realizes the optimal frequency matching is determined according to a comparison result, and according to the frequency value and the heating power, the threshold value of change in the dielectric coefficient of the object to be treated 150 is matched based on a preset comparison relationship.
Step S612: the frequency approximation range is re-determined according to the comparison result to gradually narrow the frequency approximation range for realizing optimal frequency matching to the minimum approximation range, rapidly narrow the range where the optimal frequency value is located, and then quickly determine the optimal frequency value. The flow returns to step S604.

## Claims

1. A thawing method for a heating apparatus (100), the heating apparatus (100) comprising a cavity capacitor (110) used for placement of an object to be treated, and an electromagnetic wave generation module (120) that generates an electromagnetic wave signal used for heating the object (150) to be treated, wherein the thawing method comprises:
receiving a thawing instruction input by a user (S402, S502);
acquiring a feature parameter that reflects the weight of the object to be treated, a power value of the electromagnetic wave signal, and a rate of change in a dielectric coefficient of the object to be treated (S404); and
determining the thawing progress of the object (150) to be treated according to the feature parameter, the power value and the rate of change (S406), **characterized in that**
the step of acquiring the feature parameter that reflects the weight of the object (150) to be treated comprises:
acquiring a capacitance value of the cavity capacitor (110) after the object (150) to be treated is put thereinto, the feature parameter being the capacitance value.

2. The thawing method according to claim 1, wherein the step (S406) of determining the thawing progress of the object (150) to be treated according to the feature parameter, the power value and the rate of change comprises:
determining a threshold value of change in the dielectric coefficient of the object (150) to be treated according to the feature parameter and the power value; and
when the rate of change is less than the threshold value of change, controlling the electromagnetic wave generation module to stop working.

3. The thawing method according to claim 2, wherein the step of determining a threshold value of change in the dielectric coefficient of the object (150) to be treated according to the feature parameter and the power value comprises:
according to the feature parameter and the power value, matching a corresponding threshold value of change based on a preset comparison relationship, wherein
in the case of the same power value, the threshold value of change is inversely proportional to the weight reflected by the feature parameter; and/or
in the case of the same weight reflected by the feature parameter, the threshold value of change is proportional to the power value.

4. A heating apparatus (100), comprising:
a cavity capacitor (110), used for placement of an object to be treated;
an electromagnetic wave generation module (120), configured to generate an electromagnetic wave signal for heating the object (150) to be treated in the cavity capacitor (110); and
a controller (140), configured to perform the thawing method according to any one of claims 1-3.

## Patentansprüche

1. Auftauverfahren für eine Heizvorrichtung (100), wobei die Heizvorrichtung (100) einen Hohlraumkondensator (110), der zum Platzieren eines zu behandelnden Objekts verwendet wird, und ein Modul (120) zur Erzeugung elektromagnetischer Wellen umfasst, das ein elektromagnetisches Wellensignal erzeugt, das zum Erwärmen des zu behandelnden Objekts (150) verwendet wird, wobei das Auftauverfahren umfasst:
Empfangen einer Auftauanweisung, die von einem Benutzer eingegeben wurde (S402, S502);
Erfassen eines Merkmalsparameters, der das Gewicht des zu behandelnden Objekts, einen Leistungswert des elektromagnetischen Wellensignals und eine Änderungsrate des dielektrischen Koeffizienten des zu behandelnden Objekts widerspiegelt (S404); und
Bestimmen des Auftaufortschritts des zu behandelnden Objekts (150) gemäß dem Merkmalsparameter, dem Leistungswert und der Änderungsrate (S406), **dadurch gekennzeichnet, dass**
der Schritt des Erfassens des Merkmalsparameters, der das Gewicht des zu behandelnden Objekts (150) widerspiegelt, umfasst:
Erfassen eines Kapazitätswertes des Hohlraumkondensators (110), nachdem das zu behandelnde Objekt (150) darin eingelegt wurde, wobei der Kapazitätswert der Merkmalsparameter ist.

2. Auftauverfahren nach Anspruch 1, wobei der Schritt (S406) des Bestimmens des Auftaufortschritts des zu behandelnden Objekts (150) gemäß dem Merkmalsparameter, dem Leistungswert und der Änderungsrate umfasst:
Bestimmen eines Schwellenwerts der Änderung des dielektrischen Koeffizienten des zu behandelnden Objekts (150) gemäß dem Merkmalsparameter und dem Leistungswert; und
wenn die Änderungsrate unter dem Schwellenwert liegt, wird das Modul zur Erzeugung elektromagnetischer Wellen so gesteuert, dass es nicht mehr funktioniert.

3. Auftauverfahren nach Anspruch 2, wobei der Schritt des Bestimmens eines Schwellenwerts der Änderung des dielektrischen Koeffizienten des zu behandelnden Objekts (150) gemäß dem Merkmalsparameter und dem Leistungswert umfasst:
Anpassen eines entsprechenden Schwellenwerts der Änderung gemäß dem Merkmalsparameter und dem Leistungswert basierend auf einer voreingestellten Vergleichsbeziehung,
wobei im Fall des gleichen Leistungswerts der Schwellenwert der Änderung umgekehrt proportional zum Gewicht ist, das durch den Merkmalsparameter widergespiegelt wird; und/oder
wobei im Fall des gleichen Gewichts, das durch den Merkmalsparameter widergespiegelt wird, der Schwellenwert der Änderung proportional zum Leistungswert ist.

4. Reinigungsgerät (100), umfassend:
einen Hohlraumkondensator (110), der zur Platzierung eines zu behandelnden Objekts dient;
ein Modul (120) zur Erzeugung elektromagnetischer Wellen, das so konfiguriert ist, dass es ein elektromagnetisches Wellensignal erzeugt, das zum Erwärmen des zu behandelnden Objekts (150) in dem Hohlraumkondensator (110) verwendet wird, und
eine Steuerung (140), die so konfiguiert ist, dass sie das Auftauverfahren nach einem der Ansprüche 1 bis 3 durchführt.

## Revendications

1. Procédé de décongélation pour un appareil de chauffage (100), l'appareil de chauffage (100) comprenant un condensateur à cavité (110) destiné à recevoir l'objet à traiter, et un module de génération d'ondes électromagnétiques (120) qui génère un signal d'ondes électromagnétiques utilisé pour chauffer l'objet (150) à traiter, le procédé de décongélation comprend les étapes suivantes:
la réception d'une instruction de décongélation saisie par un utilisateur (étapes S402, S502),
l'acquisition d'un paramètre caractéristique reflétant le poids de l'objet à traiter, une valeur de puissance du signal d'ondes électromagnétiques et un taux de variation du coefficient diélectrique de l'objet à traiter (étape S404); et
la détermination de l'avancement de la décongélation de l'objet (150) à traiter en fonction du paramètre caractéristique, de la valeur de puissance et du taux de variation (étape S406), **caractérisé en ce que**
l'étape d'acquisition du paramètre caractéristique qui reflète le poids de l'objet (150) à traiter comprend:
l'acquisition d'une valeur de capacité du condensateur à cavité (110) après y avoir placé l'objet (150) à traiter, cette valeur de capacité devient alors le paramètre caractéristique.

2. Procédé de décongélation selon la revendication 1, dans laquelle l'étape (S406) de détermination de l'avancement de la décongélation de l'objet (150) à traiter en fonction du paramètre caractéristique, de la valeur de puissance et du taux de variation comprend:
déterminer une valeur seuil de variation du coefficient diélectrique de l'objet (150) à traiter en fonction du paramètre caractéristique et de la valeur de puissance; et
lorsque le taux de variation est inférieure à la valeur seuil de variation, commander l'arrêt du module de génération d'ondes électromagnétiques.

3. Procédé de décongélation selon la revendication 2, dans lequel l'étape de détermination de la valeur seuil de variation du coefficient diélectrique de l'objet (150) à traiter en fonction du paramètre caractéristique et de la valeur de puissance comprend:
établir une correspondance entre le paramètre caractéristique, la puissance et une valeur seuil de variation correspondante, en se basant sur une relation de comparaison prédéfinie, cette relation stipule que:
pour une même puissance, la valeur seuil de variation est inversement proportionnelle au poids reflété par le paramètre caractéristique; et/ou
pour un même poids reflété par le paramètre caractéristique, la valeur seuil de variation est proportionnelle à la puissance.

4. Appareil de chauffage (100) comprenant
un condensateur à cavité (110), destiné à recevoir l'objet à traiter;
un module de génération d'ondes électromagnétiques (120), configuré pour générer un signal d'ondes électromagnétiques destiné à chauffer l'objet (150) à traiter dans le condensateur à cavité (110); et
un contrôleur (140), configuré pour mettre en oeuvre le procédé de décongélation selon l'une quelconque des revendications 1 à 3.
